# EUROPÄISCHE PATENTSCHRIFT

(11) **EP 0 454 171 B1**
(45) Veröffentlichungstag und Bekanntmachung des Hinweises auf die Patenterteilung: **20.10.1993**
(21) Anmeldenummer: 91106885.6
(22) Anmeldetag: 27.04.1991
(51) Int. Cl.: B65G 69/18

(54) **Gerät zur staubfreien Entladung von Schüttgütern**
Apparatus for dustfree discharge of bulk material
Appareil pour déchargement sans poussière de matières en vrac

(30) Priorität: 27.04.1990 DE 9004770 U
(43) Veröffentlichungstag der Anmeldung: 30.10.1991
(73) Patentinhaber: ASMUSSEN, Edgar, D-24939 Flensburg (DE)
(72) Erfinder: ASMUSSEN, Edgar, D-24939 Flensburg (DE)
(74) Vertreter: Richter, Werdermann & Gerbaulet

(56) Entgegenhaltungen:
- EP-A- 0 093 833
- DE-A- 2 519 773
- DE-A- 3 538 010

## Beschreibung

Die Erfindung geht aus von einem System zum staubfreien Überführen von aus einem Transportmittel zu entladenden Schüttgütern, bestehend aus einem Grundkörper mit einer Lastfahrzeugentladerampe und einem neben der Lastfahrzeugentladerampe angeordneten, in einem Einfüllbereich mit einer einen Schüttgutdurchtritt ermöglichenden Abdeckungseinrichtung versehenen Schüttrichter einer Getreidegosse.

Bisher werden die mit Schüttgut versehenen Ladeflächen von LKW's, LKW-Anhängern und landwirtschaftlichen Transportfahrzeugen entleert, indem die Ladefläche mittels Hebebühne in eine Schrägstellung versetzt wird, so daß bei Öffnung der klappbaren Seitenwand oder hinteren Abschlußwand das Schüttgut herabfällt und normalerweise in einen mit einem Gitterrost abgedeckten Schütttrichter einer Getreidegosse geschüttet werden kann. Der Schüttrichter ist dabei mit seinem Auslaß einer Einrichtung zur Weiterförderung, beispielsweise einer Förderschnecke oder einem Becherwerk zum Silo zugeordnet. Es ist dabei an einer Längsseite der Getreidegosse eine Abdeckklappe angeordnet, die schwenkbeweglich gelagert ist und an die im hochgeschwenkten Zustand die Ladefläche anlegbar ist (DE-A- 25 19 773).

Es hat sich jedoch als Problem gezeigt, daß beim Entladen von Schüttgütern wie Getreide od.dgl. durch den freien Fall von der Ladefläche bis in den Schüttrichter der Getreidegosse (Schüttgosse), der sich in der Aufstandsebene der LKW-Räder befindet, große Mengen an Staub entstehen, die vor allem für die Umwelt aber auch für die Bedienpersonen der Entladungsanlage und/oder die Fahrer und Mitfahrer des Lastfahrzeuges eine erhebliche Belastung darstellen. Die gesetzlichen Vorschriften der TA-Luft werden somit weit überschritten.

Es ist daher Aufgabe der vorliegenden Erfindung, ein Gerät zur staubfreien Entladung von Schüttgütern zu schaffen, mit dem beispielsweise ein LKW oder ein landwirtschaftliches Transportfahrzeug entladen werden kann, indem das Schüttgut unmittelbar an ein Schüttgerät überführt wird, dessen trichterförmige Einfüllöffnung an die Ladefläche des Fahrzeugs heranführbar ist, wobei die Überführung derart vorgenommen werden soll, daß insbesondere die leichten Staubanteile nicht mehr herausgeweht und in die Umwelt geblasen werden können.

Zur Lösung dieser Aufgabe wird ein System der eingangs genannten Art mit den im Anspruch 1 gekennzeichneten Merkmalen vorgeschlagen.

Die Grundidee für das staubfreie Entladen ist dabei, daß mittels der beweglichen Einfüllöffnung, der Schüttkasten oder die trichterförmigen Bewegungswände des Schüttgerätes nachgeschaltet sind, ein Schüttweg geschaffen wird, der von der Ebene des Gitterrostes der Getreidegosse als Einfüllbereich des Schüttrichters bis zur als Wagenpritsche zu bezeichnenden Ladefläche des Lastfahrzeugs reicht und das Schüttgut durch einen geschlossenen Hohlkörper in die vollständig abgedeckte Getreidegosse gelangt, so daß die Überführung nicht mehr im freien Fall durchgeführt wird, wo bisher der Wind die dann sehr leichten Staubanteile herauswehte und die Umwelt trieb. Ein wesentliches Merkmal besteht daher darin, daß bei der Schüttkastenversion der Schüttrichter an sich geschlossen ausgebildet ist und in seinem Einfüllbereich mit einer zwar einen Schüttgutdurchtritt ermöglichenden Abdeckungseinrichtung versehen ist, die jedoch den Schüttrichter im wesentlichen völlig verschließend ist und lediglich den Schüttgutdurchtritt freigibt, und daß bei der anderen Version erreicht wird, daß die Schüttgosse, die an sich unterhalb einer befahrbaren Gitterrostabdeckung geschlossen ausgebildet ist, nunmehr oberhalb dieser Abdeckung mit einer Vorrichtung derart vollkommen überdeckt wird, daß die an die Ladepritsche möglichst nahe heranreichende bewegliche Einfüllöffnung so die gesamte, beim Entladungsvorgang bis in die Gosse hineinwirkende große Staubentwicklung durch die spezielle Konstruktion des Gerätes kontrolliert und am Staubfilter der Absauganlage gebunden wird.

Das Schüttgerät hat dabei ein rechtwinkliges Format, dessen Länge jeweils der potentiellen Gossenlänge von ca. 7,0 - 9,5 m entspricht und dessen Breite so bemessen ist, daß eine sichere Aufnahme des Schüttstroms von der Ladefläche des Fahrzeugs in bezug auf die variablen Kippvorgänge möglich ist.

Der Schüttkasten hat dabei einen rechtwinkligen Querschnitt, dessen Länge der potentiellen Fahrzeuglänge entspricht und dessen Breite so bemessen ist, daß eine sichere Aufnahme des Schüttstroms von der Ladefläche des Fahrzeugs möglich ist. Der Schüttkasten selbst ist dabei bevorzugterweise aus zwei zueinander einen Winkel aufweisenden Abschnitten aufgebaut, während eine andere bevorzugte Ausführungsform darin besteht, daß er eine abgerundete Form (Rundform) aufweist, deren Radiusmittelpunkt an einem fiktiven Reifenknickpunkt des Lastfahrzeuges angeordnet ist. Dieses Gerät ist dann bevorzugterweise auch noch mit beweglichen Schüttflächen und Abdeckflächen versehen und kann optimal an den vorgesehenen Einsatzbereich angepaßt werden. Das Gerät ist dabei ca. 7 m lang und hat zwei stabile dreiecksförmige Enden. Der gebogene Rücken ist konstruktiv ausgebildet und stellt in Verbindung mit den Enden eine feste Konstruktion dar. Die Schüttzunge ist beweglich nach oben und unten zur Höhenausgleichung an Pritschen. Eine zweite bewegliche Schüttfläche reagiert auf die Kippstellung der Ladefläche. So kann das Schüttgut über die im Kippradius befindliche Rutschfläche in die Annahmegosse gelangen, ohne daß der Staub vom Wind erfaßt wird. Bevorzugterweise kommt eine obere Abdeckung zur Anwendung, so daß eine vollkommen geschlossene staubfreie Annahme möglich wird.

Gemäß der anderen bevorzugten Ausführungsform, bei der der Schüttkasten aus den bei den zueinander winkligen Abschnitten besteht, ist vorgesehen, daß der Schüttkasten aus einem allseitig geschlossenen Schüttkasten mit Stahlblechinnenverkleidung mit außenseitiger Aussteifung als Tragkonstruktion besteht. Das Gerät hängt in einem Grundrahmen und ist zu einem Lastfahrzeug hin so weit wie möglich zum Reifenknickpunkt an zwei äußersten Punkten beweglich gelagert, wobei unter Reifenknickpunkt der äußerste Aufstandspunkt des oder der dem Gerät zugewandten Reifen des Lastfahrzeuges zu verstehen sind, um die das Lastfahrzeug geschwenkt wird, sofern die Reifen auf der anderen Seite vermittels einer Hubeinrichtung angehoben werden.

Das wesentliche Merkmal des Gerätes besteht in der technischen Ausformung des beweglichen Teiles mit der trichterförmigen Ausbildung der Einfüllöffnung. Der Drehmittelpunkt liegt hierbei so nahe wie möglich dem Reifenknickpunkt. An der durchgehenden Welle sind je nach Länge des Gerätes 3 - 5 Stück spantenartige Konstruktionsteile befestigt, die gemäß Zeichnung die Ausbildung der Einfüllöffnung stabilisieren. Die vordere senkrechte Fläche besteht aus einer sensorengesteuerten Druckplatte, die beide Hydraulikvorrichtungen synchron bewegt. Am oberen Ende der Einfüllöffnung wird eine etwa 10 cm hohe gummiförmige elastische Aufkantung vorgesehen, um durch die Kippvorgänge der Ladepritschen der LKW's Verformungen am Gerät auszuschliessen.

Bevorzugterweise wird das Gerät an das Lastfahrzeug herangefahren, und zwar entweder von Hand oder über einen entsprechenden Antrieb, der über eine Rutschkupplung mit mindestens einem Antriebsrad verbunden ist.

Dabei sind entweder das oder die Antriebsräder oder die weiteren Räder, Rollen od.dgl. exentrisch am Verfahrrahmen angeordnet, damit der Schüttkasten auch bei leicht schiefstehendem LKW immer automatisch anliegend an den Rahmen bzw. die Ladefläche herangefahren wird.

Das Gerät wird so parallel und senkrecht an dem das Schüttgut tragenden Lastfahrzeug angeordnet und es wird bei Kippbewegung der Ladefläche des Fahrzeugs oder des gesamten Fahrzeugs aufgrund eines Anhebens der einen Fahrzeugseite in gleicher Weise mitbewegt, so daß das Schüttgut unmittelbar ohne zu stauben in den Schüttrichter fällt und von hier aus durch die Einfüllöffnung in den Schüttrichter, so daß eine vollständige Entleerung des Lastfahrzeuges möglich ist.

Nach erfolgter Entleerung bleibt das Gerät in dieser Schräglage stehen und wird etwa 20 bis 30 cm vom Fahrzeug abgerückt. Für das folgende Fahrzeug beginnt dann der Vorgang (Heranfahren, Aufrichten bis zur Aufnahme von Schüttgütern aller Art, Neigen in Kipprichtung des Fahrzeugs bis zu dessen Entleerung und Abrücken) von neuem.

Die Hubbewegung zwischen dem Rahmengestell des Verfahrrahmens und dem Schüttkasten wird durch eine geeignete Lenkeinrichtung durchgeführt, die bevorzugterweise durch zwei außenseitig am Schüttrichter angeordnete Hubkolben gebildet wird, die pneumatisch oder hydraulisch betrieben werden und in der Lage sind, im Kippvorgang ständig einen Gegendruck gegen das Fahrzeug zu erzeugen, damit der Schüttkasten dann am Fahrzeug anliegt, wenn das Schüttgut stoßartig in den Schüttkasten und weiter in den Schüttrichter der Getreidegosse rutscht.

Als Abdeckeinrichtung des Schüttrichters ist bevorzugterweise ein sog. Ventildeckel vorgesehen, der aus vielen kleinen leicht beweglichen Einheiten besteht und bei dem vorgesehen ist, daß diese sich nur dort öffnen, wo das Schüttgut gegenfällt, die anderen schließen den Schüttrichter nach außen hin staubdicht ab.

Weiterhin ist bevorzugterweise vorgesehen, daß im Bereich der Abdeckungseinrichtung an der oberen Gossefläche außerhalb des Schüttkegels eine Einrichtung zur Luftabsaugung angeordnet wird, mit der aus dem Schüttkasten die Luft ausgesaugt und durch ein Filtersystem gedrückt wird. Durch den so entstehenden Unterdruck wird das vom eintretenden Schüttgut verdrängte Luftvolumen kontrolliert entstaubt. Es hat sich dabei als ausreichend erwiesen, wenn der Entstaubungsfilter die Luft auf 50 mg/m³ reinigt. Mit einem derartigen Wert können die zulässigen Grenzwerte unterschritten werden und die Anlage kann, insbesondere in bezug auf Genehmigungsverfahren als geschlossene Anlage bezeichnet werden.

Vorteilhafte und zweckmäßige Ausgestaltungen und Weiterbildungen der Erfindung sind in den Unteransprüchen gekennzeichnet.

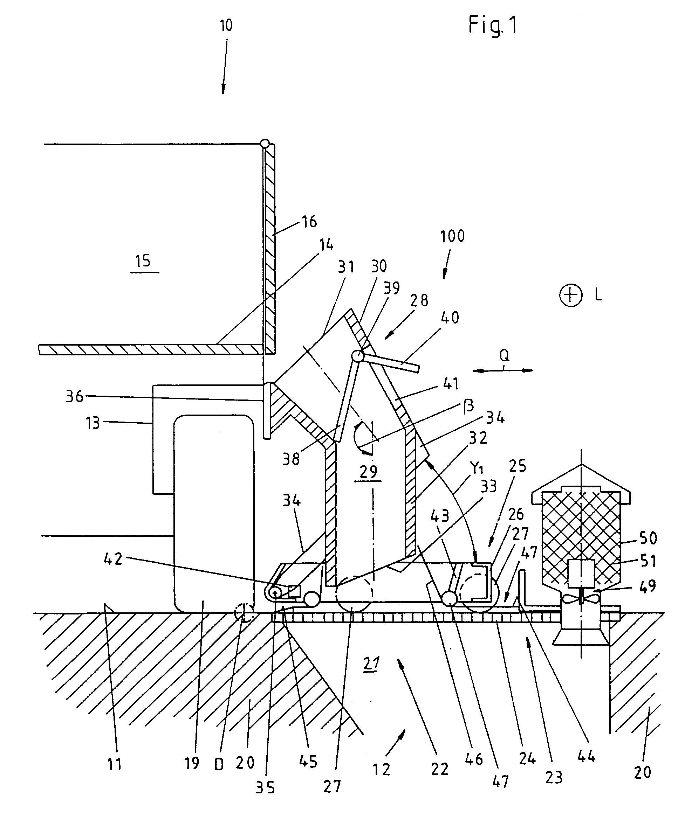

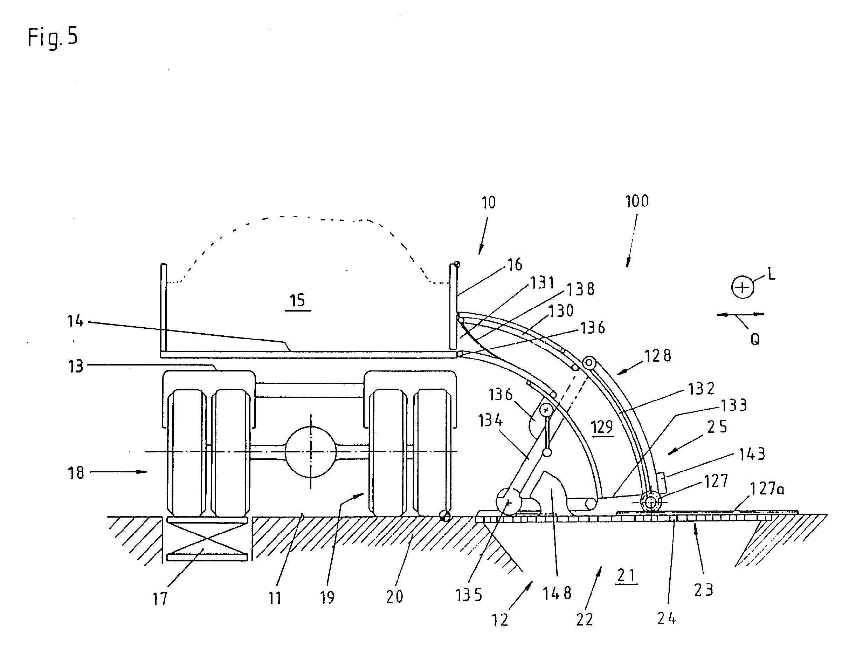

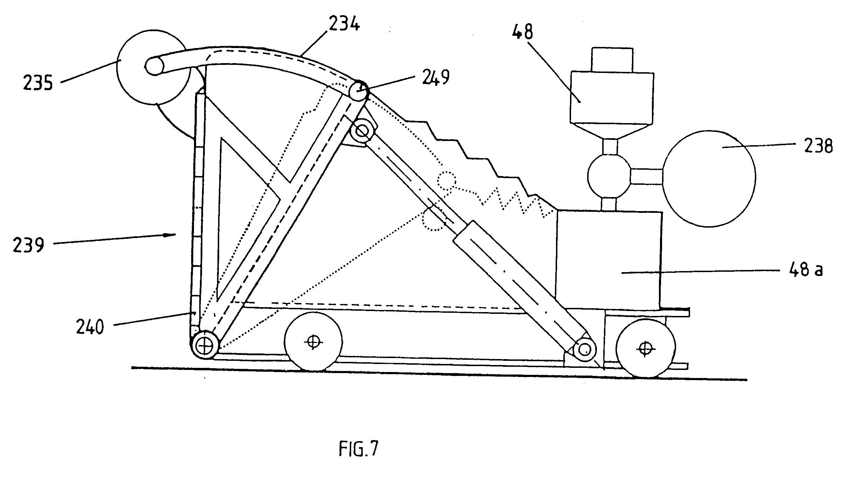

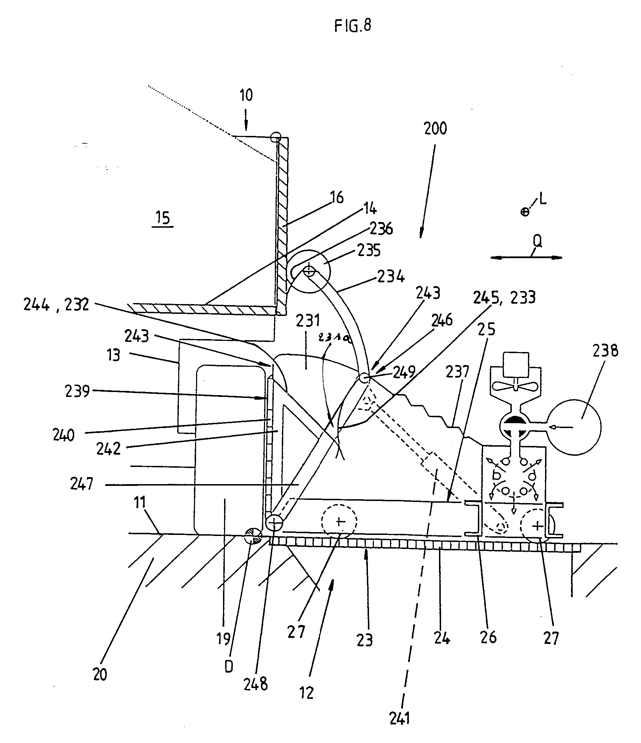

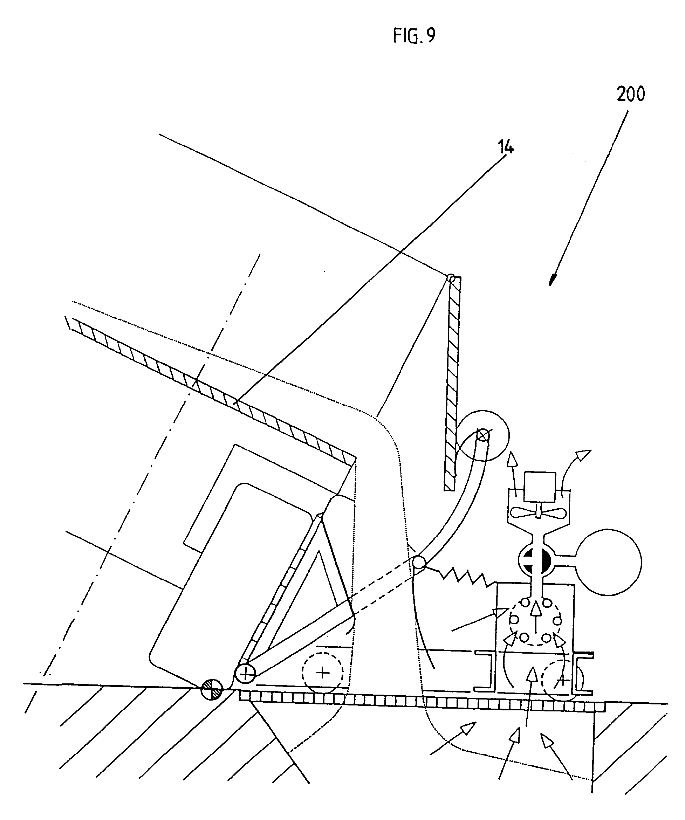

Ausführungsbeispiele der Erfindung werden nachstehend anhand der Zeichnung näher erläutert. Es zeigen
- **Fig**. 1: in einer Seitenansicht ein Gerät zur Entladung von Schüttgütern mit einem Lastfahrzeug,
- **Fig**. 2: in einer um 90° gedrehten Seitenansicht das Gerät gem. Fig. 1,
- **Fig**. 3: das Gerät gem. Fig. 1 mit angekipptem Lastfahrzeug,
- **Fig**. 4a-e: in schematischer Darstellung den Ablauf einer Entladung mittels des Gerätes,
- **Fig**. 5: in einer Seitenansicht eine weitere Ausführungsform eines Gerätes zur Entladung von Schüttgütern,
- **Fig**. 6: das Gerät gem. Fig. 5 mit angekipptem Lastfahrzeug,
- **Fig**. 7: in einer Seitenansicht eine weitere Ausführungsform eines Gerätes zur Entladung von Schüttgütern,
- **Fig**. 8: in einer teilweise geschnittenen Seitenansicht das Gerät gemäß Fig.7 mit einem Lastfahrzeug,
- **Fig**. 9: das Gerät gemäß Fig.8 mit angekipptem Lastfahrzeug,
- **Fig**.10: in einer Draufsicht das Gerät gemäß Fig.9,
- **Fig**.11: in einer Seitenansicht das Gerät gemäß Fig.5 mit einem selbstkippendem Lastfahrzeug, und
- **Fig**.12: in schematischer Darstellung den Ablauf einer Entladung mittels des Gerätes gemäß Fig.7.

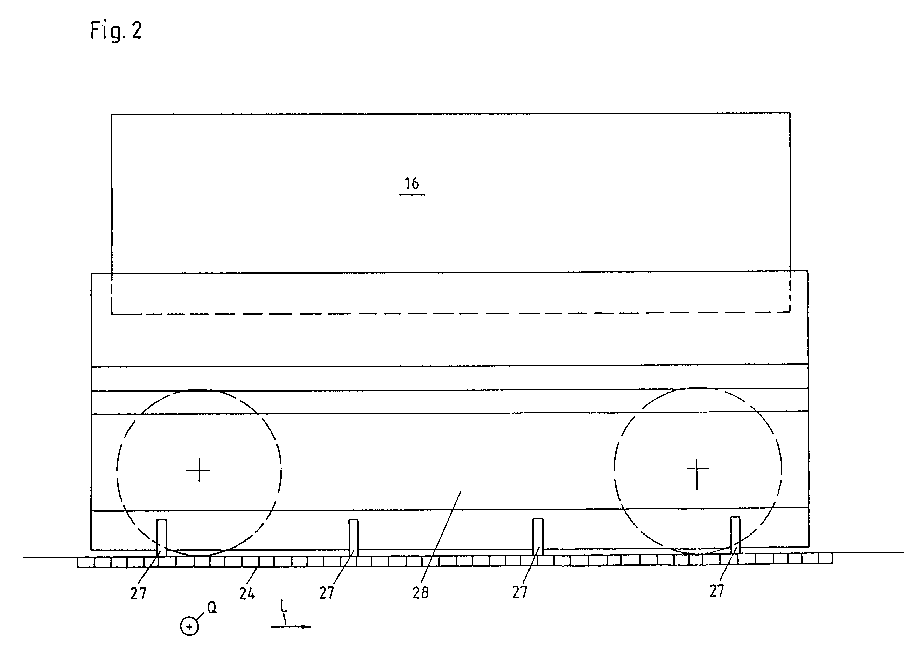

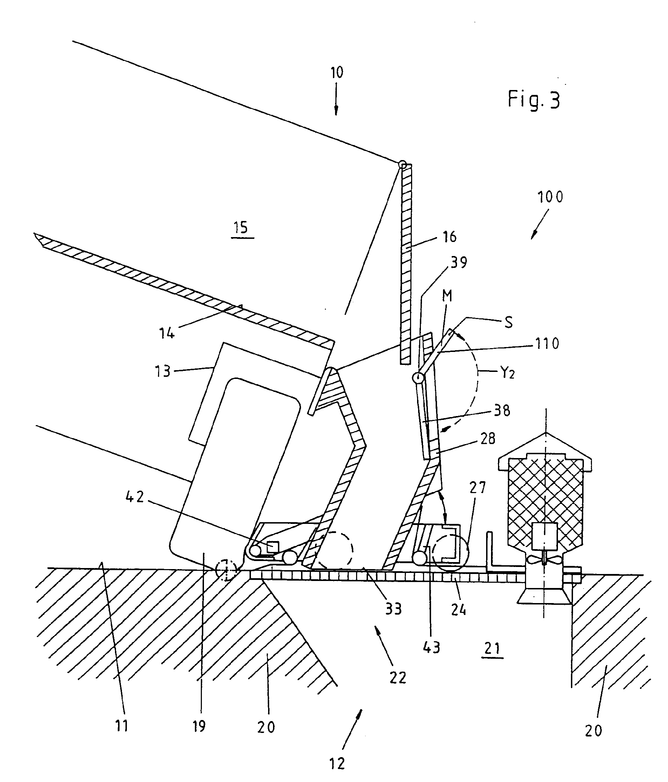

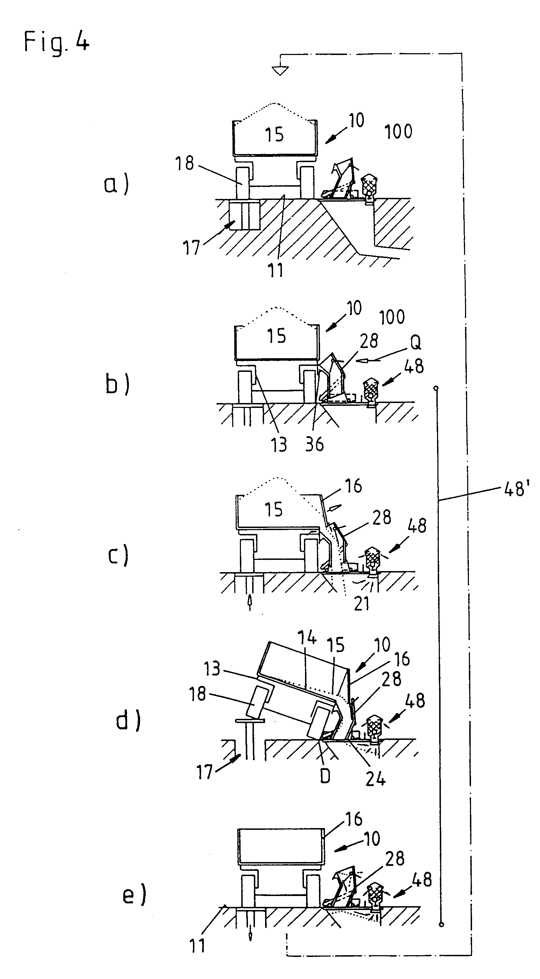

In Fig. 1 bis 4 ist ein Gerät zur Entladung eines LKW 10, der auf einer Entladerampe 11 neben einer Getreidegosse 12 steht, mit 100 bezeichnet, mit dem das auf der von einem Rahmen 13 getragenen Ladefläche 14 angeordnete und in der Zeichnung nicht dargestellte Schüttgut 15 bei Öffnung einer Seitenklappe 16 der Ladefläche 15 in die Getreidegosse 12 überführbar ist. Um den LKW 10 in eine entsprechende Schräglage zu bringen, kann entweder eine in der Zeichnung nicht dargestellte Hubeinrichtung am Rahmen 13 vorgesehen sein, die die Ladefläche 14 in eine entsprechende Schräglage versetzt oder es ist eine in Fig. 4 dargestellte Hubeinrichtung 17 vorgesehen, die das auf der vom Gerät 100 abgewandten Seite des Rahmens 13 angeordnete Rad 18 der Räder 18,19 anhebt und so den gesamten LKW 10 in Schräglage versetzt (Fig. 3). Auch kann vorgesehen sein, das Lastfahrzeug vorne, z.B. im Bereich des Führerhauses anzuheben, um es nach hinten zu entleeren.

Die Hubeinrichtung 17 ist dabei als hydraulische oder pneumatische Hubkolben-Hubzylindereinheit vorgesehen, jedoch kann auch eine mechanische, elektrische oder brennkraftmaschinenbetriebene Hubeinrichtung zur Anwendung kommen, um den LKW 10 oder ein entsprechendes anderes Lastfahrzeug wie ein LKW-Anhänger oder ein landwirtschaftliches Fahrzeug in eine entsprechende Schräglage zu bringen.

Das Gerät 100 ist dabei auf einem Grundkörper 20 angeordnet, der die Entladerampe 11 trägt und den Schütttrichter 21 beinhaltet. Der Einfüllbereich 22 des Schüttrichters 21 der Getreidegosse 12 ist dabei mit einer Abdeckeinrichtung 23 versehen, die als Gitter 24 od.dgl. ausgebildet sein kann, auf der ein Verfahrwagen 26 in einer zu einer Längsrichtung L, die im wesentlichen der Fahrtrichtung des LKW 10 entspricht, rechtwinkligen Querrichtung Q verfahrbar angeordnet ist.

Der Verfahrwagen 25 besteht dabei aus einem etwa rechteckigen, innen einen Schüttgutdurchtritt ermöglichenden Grundrahmen 26, der auf Rädern 27 auf der Abdeckeinrichtung 23 in Querrichtung Q rollt. Hier kann auch vorgesehen werden, daß entsprechende Schienen vorgesehen werden, auch können anstelle der kreisscheibenförmigen Räder Zahnräder verwendet werden, die auf entsprechenden Zahnstangen als Schienen abrollen. Wesentlich ist dabei, daß der Grundrahmen so verfahrbar ist, daß auch bei etwa schräg gestelltem LKW der Schüttkasten parallel zum LKW ausrichtbar ist.

Der Verfahrwagen 25 trägt den Schüttkasten 28, der die Form eines Hohlkörpers mit einem rechteckigen Durchtrittsquerschnitt 29 aufweist, wobei die Länge des Durchtrittsschlitzes mindestens der Länge der Ladefläche 14 des LKW 10 entspricht. Der Schüttkasten 28 besteht dabei aus einem oberen Abschnitt 30 mit der Schüttgutaufnahmeöffnung 31 und einem unteren Abschnitt 32 mit der Schüttgutausströmöffnung 33. Die beiden Abschnitte 30,32 weisen dabei einen Winkel beta zueinander auf, um das schräg einfallende Schüttgut in eine annähernd vertikale Fallrichtung umzuleiten.

Der Schüttkasten 28 ist an einem Schwenkarm 34 befestigt, der um eine Schwenkachse 35, die parallel zur Längsrichtung L verläuft, schwenkbar am Verfahrwagen 25 angelenkt ist. Über den Schwenkarm 34 ist der Schüttkasten 28 so verschwenkbar, daß er einerseits mit der Schüttgutaufnahmeöffnung 31 bis in den Bereich der Ladefläche 14 des LKW 10 und über einen Anschlag 36 an den Fahrzeugrahmen 13 in die in Fig. 1 dargestellte Lage schwenkbar ist, während bei einer Rückverschwenkung in Y1-Richtung die Schüttgutausströmöffnung 33 auf die Abdeckeinrichtung 23 des Schüttrichter 21 aufsetzbar ist.

In dem Schüttkasten 28 ist eine Schwenkklappe 37 angeordnet, die um eine Schwenkachse 38 verschwenkbar ist. Die Schwenkklappe 37 weist dabei eine dem Schüttrichterquerschnitt 29 entsprechende oder gegenüber dem Schüttrichterquerschnitt 29 größere Form auf, so daß die Schwenkklappe 38 bei Verschwenkung um die Schwenkachse 39 aus einer den Schüttrichterquerschnitt im wesentlichen freigebenden Stellung (Fig. 3) in eine den Schüttrichterquerschnitt verschließende Stellung (Fig. 1) schwenkbar ist. An der Schwenkklappe 38 ist ein ebenfalls um die Schwenkachse 39 verschwenkbarer Schwenkarm 40 auskragend angeordnet, der eine Gehäuseöffnung 41 im Schüttkasten 28 durchtretend in allen Schwenkstellungen der Schwenkklappe 38 zumindest abschnittsweise außerhalb des Schüttkasten 28 befindlich ist, so daß durch eine Verschwenkung in Y2-Richtung die Schwenkklappe 38 durch Betätigung des Schwenkarms 40 von außen in eine den Schüttrichterquerschnitt 29 freigebende Stellung verschwenkbar ist. Der Schwerpunkt S und die Masse M des Schwenkarms 40 sind dabei so angeordnet bzw. gewählt, daß der Schwenkarm 40 in seinem Moment um die Schwenkachse 39 gegenüber dem Schwenkmoment der Schwenkklappe 38 um die Schwenkachse 39 größer ist und bewirkt, daß die Schwenkklappe 38 immer in eine Anfangs- bzw. Ruhestellung verschwenkt wird, in der sie den Querschnitt des Schüttkastens 28 verschließend ist. Bei Auftreffen von Schüttgut auf die Schwenkklappe 38 wird diese dann durch die entstehenden Kräfte um die Schwenkachse 39 und die in Fig. 3 dargestellte Lage in Y2-Richtung verschwenkt. Es kann auch vorgesehen werden, anstelle einer Schwenkklappe 38 eine Anzahl von Schwenkklappen parallel nebeneinander anzuordnen. Es öffnen sich dann eine oder mehrere Schwenkklappen gerade dort, wo Schüttgut auftrifft.

An dem Grundrahmen 26 des Verfahrwagens 25 ist eine in der Zeichnung nur angedeutete und bevorzugterweise aus zwei Hubeinrichtungen bestehende Antriebseinrichtung 42 vorgesehen, mit der die Verschwenkung des Schwenkarms 34 durchführbar ist und die pneumatisch oder hydraulisch aber auch elektromotorisch oder brennkraftmaschinenangetrieben betätigbar ist.

Weiterhin ist am Grundrahmen 26 des Verfahrwagens 25 eine nicht dargestellte Antriebseinrichtung vorgesehen, die über eine ebenfalls nicht dargestellte Rutschkupplung mit einem der Räder 27 oder einer Antriebsrolle, einem Reifen, einem Schienenrad od.dgl. verbunden ist und zur Verfahrbarkeit des Verfahrwagens 25 dient. Diese Antriebseinrichtung kann als mechanischer, hydraulisher, pneumatischer, elektromotorischer oder brennkraftmaschinenbetriebener Antrieb ausgebildet sein.

Andererseits oder ergänzend kann auch eine Antriebseinrichtung 43 vorgesehen sein, die als Ketten- oder Seilantrieb ausgebildet ist, der aus einem auf der Abdeckeinrichtung 23 zwischen zwei Einspannpunkten 44,45 verlaufenden, endseitig befestigten Kette oder Seil 46 ablaufenden Antriebsrad 47 besteht, das mit einem mechanischen, hydraulischen, pneumatischen, elektromotorischen oder brennkraftmaschinenbetriebenen Antrieb antreibbar ist, so daß sich bei eingeschaltetem Antrieb der Verfahrwagen 25 entlang des Seiles 46 auf der Abdeckeinrichtung 23, d.h. auf dem Siebgitter 24 in Querrichtung Q bewegt.

An der Abdeckeinrichtung 23 ist eine Absaugeinrichtung 48 angeordnet, die aus einem Gebläse 49 besteht, das die Luft aus dem Schüttrichter 21 ansaugt und einem in einem Gehäuse 50 angeordneten Filter 51 zuführt, von wo die gereinigte Luft in die Umgebung austreten kann.

Anhand von Fig. 4 sei kurz die Arbeitsweise des Gerätes 100 erläutert. Der mit dem Schüttgut 15 beladene LKW 10 fährt auf die Entladerampe 11, und zwar so, daß mindestens eins, vorzugsweise jedoch alle auf der von dem Gerät 100 abgewandten Seite befindlichen Räder 18 auf der Hubeinrichtung 17 stehen (Fig. 4a).

Sodann wird das Gerät 100 mit dem Verfahrwagen 25 vermittels der Antriebseinrichtung 43 in Q-Richtung an den LKW 10 herangefahren, und der Schüttkasten 28 wird vermittels der Antriebseinrichtung 42 mit dem Anschlag 36 an den Rahmen 13 des LKW 10 herangeschwenkt (Fig. 4b). Dabei erfolgt eine Ausrichtung des Verfahrwagens 25 und des Schüttkastens 28 so, daß eine bündige Anlage an den LKW 10 gewährleistet ist, so daß kein Schüttgut in dem Schüttkasten 28 vorbeifallen kann.

Sodann wird die Seitenklappe 16 geöffnet, so daß das Schüttgut 15 in die Schüttgutaufnahmeöffnung 31 des Schüttkastens 28 einströmt und diesen durchströmend und die Abdeckeinrichtung 23 durchtretend in den Schüttrichter 21 fällt. Zu Beginn des Schüttvorgangs wird bereits die Absaugeinrichtung 48 angeschaltet, was in der Zeichnung durch die Linie 48' angedeutet ist (Fig. 4c).

Als nächster Schritt wird dann die Hubeinrichtung 17 betätigt, um das Rad 18 und damit den Rahmen 13 des LKW 10 anzuheben und die Ladefläche 14 schrägzustellen, so daß das Schüttgut 15 vollständig durch die geöffnete Seitenklappe 16 herausfällt und in den Schüttkasten eintritt. Gleichzeitig wird über den Schwenkarm 34 der Schüttkasten 28 zurückgeschwenkt. Da der Schwenkpunkt des Schwenkarmes 34, d.h. die Schwenkachse 35 praktisch am Drehpunkt D des LKW 10 aufgrund der Schwenkbewegung infolge des Anhebens der Hubeinrichtung 17 liegen, erfolgt praktisch eine gemeinsame Verschwenkung des LKW 10 und des Schüttkastens 28, so daß immer eine sichere Überführung des Schüttgutes 15 in den Schüttkasten 28 gewährleistet ist. Die Schüttgutaufnahmeöffnung 31 im oberen Abschnitt 30 des Schüttkasten 28 ist dabei so gestaltet, daß die Schwenkklappe 16 innerhalb der Schüttgutaufnahmeöffnung 31 pendelt, so daß nahezu eine geschlossene Überführung des Schüttgutes 15 in den Schüttkasten 28 möglich ist. Da in der in Fig. 4d dargestellten Stellung der Schüttkasten 28 bereits soweit verschwenkt ist, daß die Schüttgutausströmöffnung 33 auf dem Siebgitter 24 aufliegt, ist auch dort eine geschlossene Überführung gegeben, so daß praktisch keinerlei Staubaustritt mehr erfolgt. Da gleichzeitig (entsprechend 48') die Absaugeinrichtung 48 angeschaltet bleibt, entsteht im Schüttrichter 21 ein Unterdruck, so daß ohnehin bei sich ergebenden Öffnungen zwischen der Ladefläche 14 und dem Schüttkasten 28 und/oder dem Schüttkasten 28 und dem Sieb 24 die Luft einströmen wird, so daß ein Austreten von Staub oder anderen Verunreinigungen vermeidbar ist.

Nach vollständiger Entleerung des LKW 10 wird dieser wieder in seine Ausgangslage zurückgeschwenkt und die Seitenklappe 16 geschlossen, worauf der LKW dann die Entladerampe 11 verlassen kann. Der Schüttkasten 28 verbleibt in seiner mit der Schüttgutausströmöffnung 33 das Siebgitter 24 kontaktenden Stellung, wobei die Schwenkklappe 38 in ihre Verschließstellung schwenkt, so daß ein Austritt von Staub aus dem Schüttkasten 28 nicht möglich ist. Gleichzeitig ist immer noch die Absaugeinrichtung 48 angeschaltet, und zwar so lange, bis sichergestellt ist, daß auch bei Rückverschwenkung des Schüttkastens 28 kein Staubaustritt mehr zu befürchten ist. Es kann dabei vorgesehen werden, daß dann die Absaugeinrichtung 48 abgeschaltet wird, es kann jedoch gleichfalls vorteilhaft sein, die Absaugeinrichtung 48 dann mit kleinerer Leistung weiterzubetreiben, um einen Staubaustritt auch bei weiterer Betätigung des Gerätes 100 sicher zu vermeiden.

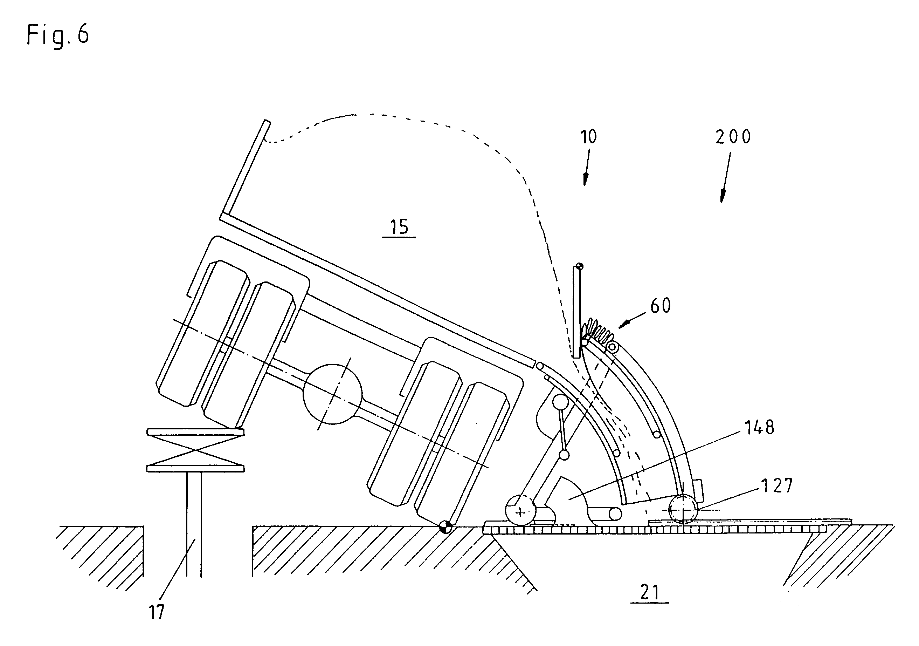

In Fig. 5 und 6 ist eine weitere Ausführungsform des Gerätes 200 dargestellt, die in ihrer grundsätzlichen Ausgestaltung dem Gerät 100 entspricht, so daß hinsichtlich der gleichbezeichneten Teile auf die voranstehende Beschreibung Bezug genommen wird. Unterschiedlich ist dabei die Ausgestaltung des Schüttkastens 128, der zwar ebenfalls einen etwa rechteckförmigen Querschnitt 129 aufweist, dessen Länge der Länge der Ladefläche 14 des LKW 10 entspricht, jedoch besteht der Schüttkasten 128 aus einem oberen kreisbogenförmigen Abschnitt 130 mit der Schüttgutaufnahmeöffnung 131 und einem unteren kreisbogenförmigen Abschnitt 132 mit der Schüttgutausströmöffnung 133. Der Abschnitt 130 ist dabei schmaler ausgebildet, so daß er teleskopartig in den Abschnitt 132 einschiebbar ist. Um einen Staubaustritt sicher zu vermeiden, ist eine sich ziehharmonikaeinfaltende Abdeckung 60 auf dem oberen Abschnitt 130 angeordnet. Im Inneren des Abschnitts 130 des Schüttkastens 128 ist eine aus einer Kunststoffolie oder einem Textil gebildete Schleppe 138 angeordnet, deren Funktion der voranstehend beschriebenen Funktion der Schwenkklappe entspricht, nämlich den Schüttgutquerschnitt im Schüttkasten nur zu öffnen, wenn Schüttgut durchtritt.

Das Aus- und Einfahrens des Abschnitts 130 aus dem bzw. in den Abschnitt 132 wird vermittels eines in der Zeichnung nicht dargestellten pneumatischen Vortriebs durchgeführt, während der untere Abschnitt 132 über den Schwenkarm 134 um die Schwenkachse 135 verschwenkbar ist, wobei auch vorgesehen sein kann, über das bei 136 angedeutete Getriebe eine Höhenverstellung, d.h. eine Längung oder Kürzung des Schwenkarms 134 durchzuführen.

Der Verfahrwagen 25 ist mit einem Elektroantrieb 143 versehen, der ein Zahnrad 127 dreht, das auf einer Zahnstange 127a auf dem Siebgitter 24 abläuft und zu einer Verfahrbarkeit des Verfahrwagens 25 führt. Auch bei dieser Konzeption ist immer sichergestellt, daß während des in Fig. 6 angedeuteten Schüttvorgangs bei angehobener Hubeinrichtung 17 das Schüttgut 15 so in den Schüttrichter 21 überführt wird, daß ein Staubeintritt weitgehend vermieden wird, wobei auch hier eine Absaugeinrichtung 148 vorgesehen ist.

Bei der in Fig.7 - 12 dargestellten Ausführungsform des Gerätes 200 sind wesentliche Teile gleich, so daß gleiche Teile gleich bezeichnet sind und auf die voranstehende Beschreibung Bezug genommen wird. Wie in Fig.7 und 8 zu erkennen ist, ist vorgesehen, daß die Begrenzungseinrichtungen 243 der Schüttgutaufnahme 231 aus zwei uneinander einen Winkel aufweisenden Trichterwänden 244,245 bestehen und daß eine der Trichterwände 244 durch einen zur vertikalen, geneigt ausgebildeten, glatten plattenförmigen Körper als Rutschfläche 232 gebildet ist, während die andere Trichterwand 245 durch einen im oberen Öffnungsbegrenzungsbereich 246 schwenkbar gelagerten plattenförmigen Körper gebildet ist. Es kann auch vorgesehen werden, daß eine der Trichterwände 245 durch eine im oberen Öffnungsbegrenzungsbereich 246 schwenkbar gelagerte gummiartige, vorgespannte Schleppe 233 gebildet ist. Der Schüttkasten 28 bzw. der Tragrahmen 242 ist an einem Schwenkarm 34;247 angeordnet, der um die zur Längsachse L parallele Schwenkachse 35;248 schwenkbar am Grundrahmen 26 des Verfahrwagens 25 angelenkt ist.

Somit wird die trichterförmige Schüttgutaufnahme 231 mit der Einfüllöffnung 231a einerseits durch die geneigte glatte Rutschfläche 232 und andererseits durch die beispielsweise gummiartige vorgespannte Schleppe 233 gebildet, die nur bei Gegendruck, wie er beim Schüttvorgang entsteht, nachgibt und somit nur im Schüttbereich das Schüttgut 15 ungehindert passieren läßt. In den vom Schüttgut unberührten Bereichen - so vornehmlich an den Außenseiten - bleibt die Schleppe 233 geschlossen und verhindert so den Austritt von Schüttstaub. Zur Minimierung des Staubanfalls bereits an der Pritschenkante dient die bewegliche Abdeckhaube 234 mit der Gleitrolle 235 und dem gummiartigen Abdichtungsmaterial 236 oberhalb des Gerätes an der Gleitrolle 235, das in dem Bereich der Entladungsklappe 16 schwenkend ist und wie eine große Dichtlippe wirkt. Dieser bewegliche klappenartige Mechanismus hat im Drehpunkt eine doppelwirkende Feder, so daß er immer wieder in seine Ausgangsstellung zurückgebracht wird.

Weiterhin ist zur Minimierung des Staubanfalls eine Abdeckplane 237 als großflächige Abdeckung des Gerätes aus einem hochreißfesten und witterungsbeständigen Gewebematerial aus Kunststoff vorgesehen. Die Abdeckplane 237 übergreift, wie in Fig.7 dargestellt, das ganze Gerät 200 oben und seitlich. Es ist dabei vorgesehen, daß sich zwischen der Absaugeinrichtung 48 und/oder dem Grundkörper 20 und dem oberen Öffnungsbegrenzungsbereich 246, der von einer rohrförmigen Tragstange 249 gebildet wird, eine bewegliche Abdeckplane od.dgl. 237 erstreckt. Durch diese Ausbildung wird das gesamte Gerät genehmigungsrechtlich zu einer geschlossenen Anlage, was für den nutzungsrechtlichen Einsatz große Kosten- und Zeitvorteile bringt. Die Absauganlage 48 zur Staubbindung besteht aus einer industriemäßig vorhandenen Anlage, die über die gesamte Länge des Gerätes montiert wird. Durch die Absaugung entsteht innerhalb des Schüttgerätes 200 ein Vacuum. Die durch die Leckagen hereinströmende Luft ist versucht, die abgesaugte Luftmenge auszugleichen, wodurch ein Staubaustritt natürlicherweise verhindert wird. Am Filtertuch in 48a des Absaugemantels (nicht dargestellt) der Absauganlage 48 sammelt sich solange Staub an, bis ein gewisser Widerstand erreicht ist, der dann den Druckbehälter 238 aktiviert und schockartig den Staubmantel aufbläst, um sich so von der dicken Staubschicht zu befreien.

Diese so entstandene Staubmasse fällt in die Gosse 21, und der Absaugvorgang beginnt von neuem.

In Ruhestellung wird die Abdeckhaube 234 über die Einfüllöffnung 231a gelegt, so daß die gesamte Gosse 12 gegen Regen und Witterung geschützt ist. In dieser Stellung ist bei außenliegenden Gossen 12 auch an überwinterung gedacht. Sobald aber ein Entladungsvorgang vorbereitet wird, wird das Schüttgerät 200 zurückgezogen mit geöffneter Abdeckhaube 234.

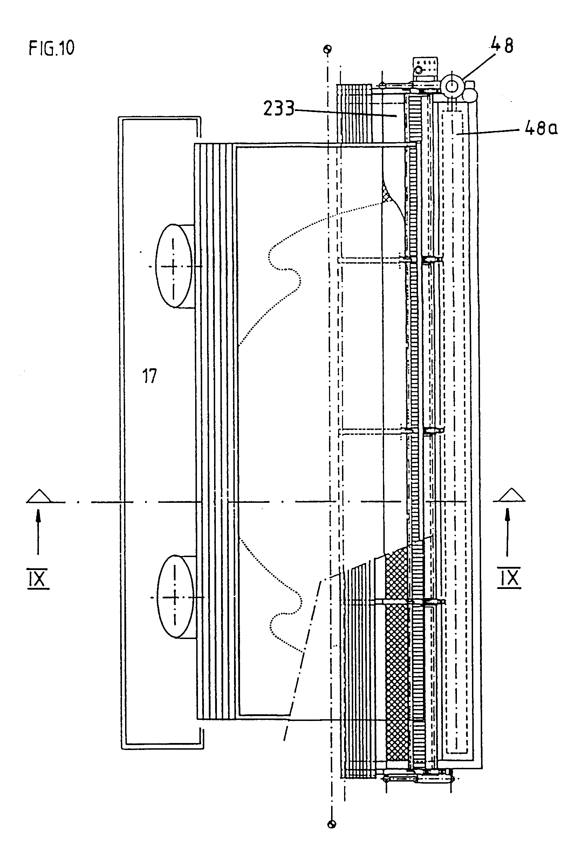

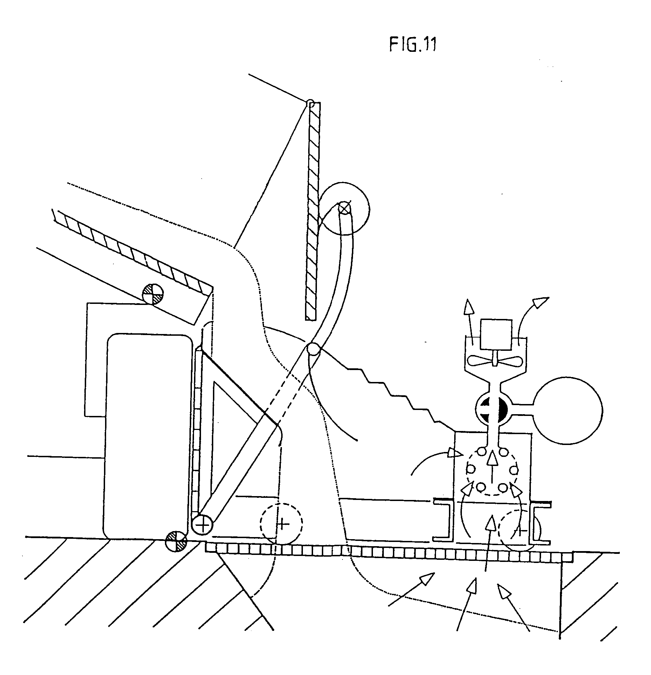

In dieser Position wird ein freies Anfahren an die Gosse 12 ermöglicht, wobei nur darauf zu achten ist, daß auf der Gegenseite die Räder 18,19 des beladenen Fahrzeuges 10 korrekt auf der Hebevorrichtung 17 plaziert sind. Nun wird das Schüttgerät 200 per Rollenantrieb 42 - elektrisch oder hydraulisch - an das zu entladende Fahrzeug herangefahren und mittels individueller Antriebssteuerung parallel und kontaktmäßig zur Ladepritsche ausgerichtet. Die obere Abdeckhaube 233 legt sich hierbei mit leichtem Gegendruck gegen die Entladeklappe 16. Nach dem Entriegeln der Ladeklappe 16 fällt sofort das Schüttgut 15 direkt in die trichterförmige Einfüllöffnung 231a des Schüttgerätes 200 und weiter in die Gosse 12, von wo es mittels Schneckenwelle und rotierenden Becherwerkes in die Silos befördert wird. Nach diesem selbsttätigen Entladevorgang wird die Hebevorrichtung 17 eingeschaltet, die das Fahrzeug 10 langsam in eine Kippbewegung bringt (Fig.9 und 10). Hierbei neigen sich Karosserieteile des Fahrzeuges gegen die senkrechte Druckplatte 239 des Schüttgerätes, wodurch wiederum bei geringstem Andruck an beliebiger Stelle - über Sensoren 240 gesteuert - der beidseitige hydraulische Bewegungsmechanismus 241 des beweglichen Teils des Gerätes synchron aktiviert wird und so mit jeder Berührung einen Impuls auslöst, bis Fahrzeug 10 und Schüttgeräte 200 die größtmögliche Kippneigung erreicht haben zwecks vollkommener Entleerung des Fahrzeuges 10. Die gleichen Vorgänge ergeben sich, wenn das Fahrzeug nicht mittels der Hubvorrichtung 17 angehoben wird, sondern selbsttätig die Ladefläche neigen kann, wie dies in Fig.11 dargestellt ist.

Während das Fahrzeug 10 durch Absenken der Hebebühne 17 wieder in Ausfahrbereitschaft gebracht wird, verbleibt das Schüttgerät 100 in der Kippstellung und wird wieder zurückgefahren, bis das nächste Fahrzeug wieder einen staubfreien Entladungsvorgang erfordert, um diese Prozeduren in dieser Weise immer wieder ablaufen zu lassen. An der Seite des Gerätes ist ein Bedienpult angeordnet, das nur vom Fachpersonal bedient wird.

Dieses Gerät dient ebenfalls zur staubfreien Entladung von Eigenkippern. Hierbei verbleibt die Einfüllöffnung des Gerätes in der senkrechten Normalstellung, während das Fahrzeug durch die eigene Hydraulik eine Kippbewegung der Pritsche erzeugt ohne Veränderung des Chassis. Die Staubabsaugung erfolgt auch hier in gleicher Weise.

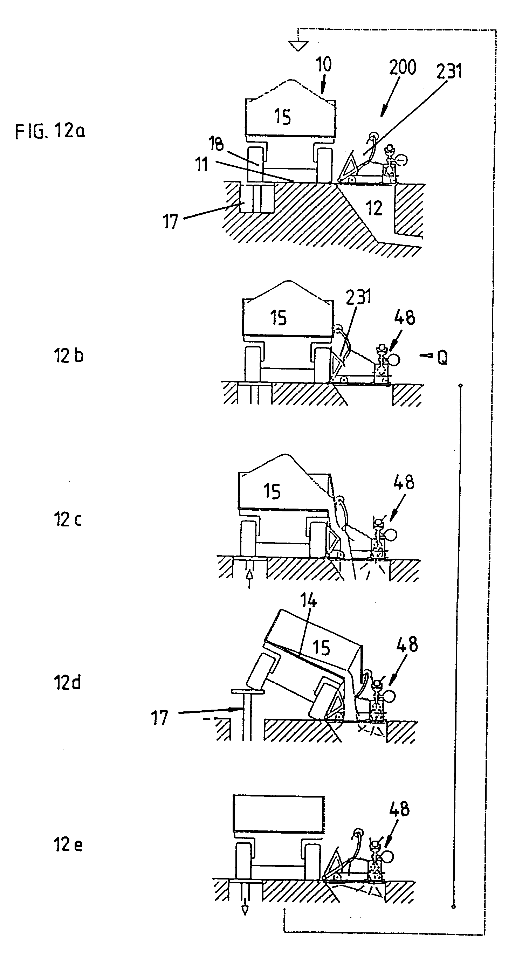

In Fig. 12a bis 12e ist der Entleerungsvorgang schematisch dargestellt, wobei der Ablauf dem voranstehend anhand von Fig.4 erläuterten Ablauf entspricht.

## Patentansprüche

1. System (100;200) zum staubfreien Überführen von aus einem Transportmittel wie einem Lastfahrzeug (10) zu entladenden Schüttgütern, bestehend aus einem Grundkörper (20) mit einer Lastfahrzeugentladerampe (11) und einem neben dieser Lastfahrzeugentladerampe (11) angeordneten, in seinem Einfüllbereich (22) mit einer einen Schüttgutdurchtritt ermöglichenden Abdeckungseinrichtung (23) versehenen Schüttrichter (21) einer Getreidegosse (12),
dadurch gekennzeichnet,
daß auf der Abdeckungseinrichtung (23) ein Verfahrwagen (25) in einer zu der Längsrichtung (L) des Schüttrichters (21) rechtwinkligen Querrichtung (Q) verfahrbar angeordnet ist, und daß der Verfahrwagen (25) aus einem auf Rollen (27), Reifen, Schienenrädern od.dgl. gelagerten Grundrahmen (26) besteht, wobei an dem Grundrahmen (26) entweder ein um eine zur Längsachse (L) parallele Schwenkachse (35) schwenkbarer, hohlkörperförmiger Schüttkasten (28;128) angeordnet ist, der eine Schüttgutaufnahmeöffnung (31;131) und eine Schüttgutausströmöffnung (33;133) und einen konstanten oder sich ändernden Durchtrittsquerschnitt (29;129) für den Schüttgutdurchtritt aufweist, oder ein um eine zur Längsachse (L) parallele Schwenkachse (248) schwenkbarer ein Tragrahmen (242) angeordnet ist, an dem eine von Begrenzungseinrichtungen (243) gebildete trichterförmige Schüttgutaufnahme (231) ausgebildet ist, wobei der Schüttweg durch den hohlkörperförmigen Schüttkasten (28) bzw. die trichterförmige Schüttgutaufnahme (231) so ausgebildet ist, daß er von der Ebene des Gitterrostes der Getreidegosse als Einfüllbereich des Schüttrichters bis zur als Wagenpritsche zu bezeichnenden Ladefläche des Lastfahrzeugs reicht und das Schüttgut durch einen geschlossenen Hohlkörper in die vollständig abgedeckte Getreidegosse gelangt.

2. System nach Anspruch 1,
dadurch gekennzeichnet,
daß der Schüttkasten (28) aus zwei zueinander einen Winkel beta aufweisenden Abschnitten (30,32) mit einem jeweils rechteckigen Querschnitt besteht.

3. System nach Anspruch 1,
dadurch gekennzeichnet,
daß die Begrenzungseinrichtungen (243) aus zwei zueinander einen Winkel aufweisenden Trichterwänden (244,245) bestehen.

4. System nach Anspruch 3,
dadurch gekennzeichnet,
daß eine der Trichterwände (244) durch einen zur vertikalen, geneigt ausgebildeten, glatten plattenförmigen Körper als Rutschfläche (232) gebildet ist.

5. System nach Anspruch 3,
dadurch gekennzeichnet,
daß eine der Trichterwände (245) durch einen im oberen Öffnungsbegrenzungsbereich (246) schwenkbar gelagerten plattenförmigen Körper gebildet ist.

6. System nach Anspruch 3,
dadurch gekennzeichnet,
daß eine der Trichterwände (245) durch eine im oberen Öffnungsbegrenzungsbereich (246) schwenkbar gelagerte gummiartige, vorgespannte Schleppe (233) gebildet ist.

7. System nach einem der Ansprüche 1 bis 6,
dadurch gekennzeichnet,
daß der Schüttkasten (28) bzw. der Tragrahmen (242) an einem Schwenkarm (34;247) angeordnet ist, der um die zur Längsachse (L) parallele Schwenkachse (35;248) schwenkbar am Grundrahmen (26) des Verfahrwagens (25) angelenkt ist.

8. System nach einem der Ansprüche 1 oder 2,
dadurch gekennzeichnet,
daß im Bereich der Schüttgutaufnahmeöffnung (31) des Schüttkastens (28) mindestens eine dem Schüttgutrohrquerschnitt (29) entsprechend geformte oder gegenüber dem Schüttgutquerschnitt (29) größere Schwenkklappe (38) im Schüttkasten (28) schwenkbar angeordnet ist.

9. System nach Anspruch 8,
dadurch gekennzeichnet,
daß an der Schwenkklappe (38) ein auskragender Schwenkarm (39) angeordnet ist, dessen Massenschwerpunkt (S) so in einem Abstand vom Schwenklager angeordnet ist, daß er die Schwenkklappe (38) in einer den Schüttgutrohrquerschnitt (29) verschließenden Ruhe- oder Ausgangslager halternd ist.

10. System nach einem der Ansprüche 1 bis 9,
dadurch gekennzeichnet,
daß der Schüttkasten (28) mit der Schüttgutaufnahmeöffnung (31) bzw. der Tragrahmen (242) mit der Schüttgutaufnahmeöffnung (231) in einen Schüttguteintrittsbereich und bevorzugterweise mit einem Anschlag (36;249) lastfahrzeugrahmenanlegbar schwenkbar ist.

11. System nach Anspruch 10,
dadurch gekennzeichnet,
daß der Anschlag (239) als mit Sensoren (250) gesteuerte Druckplatte ausgebildet ist.

12. System nach einem der Ansprüche 1 oder 2,
dadurch gekennzeichnet,
daß der Schüttkasten (28) mit der Schüttgutausströmöffnung (33) bis in den Bereich der Abdeckungseinrichtung (23) schwenkbar ist.

13. System nach einem der Ansprüche 1 bis 12,
dadurch gekennzeichnet,
daß die Abdeckungseinrichtung (23) als Gitter (24) ausgebildet ist.

14. System nach einem der Ansprüche 1 bis 13,
dadurch gekennzeichnet,
daß die Abdeckungseinrichtung (23) als Rahmen ausgebildet ist, in dem eine Anzahl von plattenartigen Abdeckabschnitten zur Ausbildung einer Einschüttöffnung verschiebbar angeordnet sind.

15. System nach einem der Ansprüche 1 bis 14,
dadurch gekennzeichnet,
daß an dem Grundrahmen (26) des Verfahrwagens (25) eine Antriebseinrichtung (42) zur Verschwenkung des Schwenkarms (34) angeordnet ist.

16. System nach Anspruch 15,
dadurch gekennzeichnet,
daß die Antriebseinrichtung (42) als mindestens eine Hubkolben-Zylindereinheit (241) ausgebildet ist, die pneumatisch oder hydraulisch betätigbar ist.

17. System nach einem der Ansprüche 1 bis 16,
dadurch gekennzeichnet,
daß der Verfahrwagen (25) mindestens eine über eine Rutschkupplung mit einem Antriebsrad (27), -reifen, -schienenrad od.dgl. verbundene Antriebseinrichtung (43) aufweist, die als mechanischer, hydraulischer, pneumatischer, elektromotorischer oder brennkraftmaschinenbetriebener Antrieb ausgebildet ist.

18. System nach einem der Ansprüche 1 bis 17,
dadurch gekennzeichnet,
daß der Verfahrwagen (25) eine Antriebseinrichtung (143) aufweist, die als Ketten- oder Seilantrieb ausgebildet ist, der aus einer auf der Abdeckungseinrichtung (23) zwischen zwei Einspannpunkten (44,45) verlaufenden, endseitig befestigten Kette oder Seil (46) und einem in die Kette eingreifenden oder an dem Seil (46) ablaufenden Antriebsrad (47) besteht, das mit einem mechanischen, hydraulischen, pneumatischen, elektromotorischen oder brennkraftmaschinenbetriebenen Antrieb antreibbar ist, so daß der Verfahrwagen (25) sich entlang der Kette oder des Seiles (46) bewegt.

19. System nach einem der Ansprüche 1 bis 18,
dadurch gekennzeichnet,
daß an der Abdeckungseinrichtung (23) eine Absaugeinrichtung (48) angeordnet ist, vermittels derer Luft aus dem Schüttrichter (21) absaugbar, durch ein Filtersystem (51) zur Entstaubung durchleitbar und in die Umgebungsluft abblasbar ist.

20. System nach einem der Ansprüche 1 bis 19,
dadurch gekennzeichnet,
daß an dem Grundkörper (20) eine Fahrzeugräderhubeinrichtung (17) angeordnet ist.

21. System nach einem der Ansprüche 1 bis 20,
dadurch gekennzeichnet,
daß an dem Grundkörper (20) eine Absaugeinrichtung (48) angeordnet ist, vermittels derer Luft aus dem der Schüttgutaufnahme (231) nachgeordneten Bereich absaugbar, durch ein Filtersystem (51) zur Entstaubung durchleitbar und in die Umgebungsluft abblasbar ist.

22. System nach einem der Ansprüche 19 bis 21,
dadurch gekennzeichnet,
daß sich zwischen der Absaugeinrichtung (48) und/ oder dem Grundkörper (20) und dem oberen Öffnungsbegrenzungsbereich (246), der von einer rohrförmigen Tragstange (249) gebildet wird, eine bewegliche Abdeckplane od.dgl. (237) erstreckt.

23. System nach einem der Ansprüche 1 bis 21,
dadurch gekennzeichnet,
daß in dem oberen Öffnungsbegrenzungsbereich (246), der von einer rohrförmigen Tragstange (249) gebildet wird, eine schwenkbar angelenkte Abdeckhaube (234) angeordnet ist.

24. System nach Anspruch 23,
dadurch gekennzeichnet,
daß an der Abdeckhaube (234) eine Gleitrolle (235) drehbar angeordnet ist.

## Claims

1. System (100;200) for the dustfree discharge of bulk materials to be unloaded from a means of conveyance, such as a truck (10), comprising a basic frame (20) with a truck unloading ramp (11) and a discharge hopper (21) of a grain channel (12) disposed next to the truck unloading ramp provided within its filling area (22) with a protective covering means (23) rendering the passage of the bulk material possible,
characterized in that,
on the protective covering means (23), a conveying car (25) is disposed so as to be displaceable in a transverse direction (Q) which is at right angles to the longitudinal direction (L) of the discharge hopper (21), and in that the conveying car (25) is comprised of a frame base (26) supported on rollers (27), tires, track wheels or the like, in which, on the frame base (26), either a hollow body-like hopper (28;128) that is swivelable about a swivel axis (35) parallel to the longitudinal axis (L), is disposed which possesses a bulk material receiving aperture (31;131) and a bulk material outflow aperture (33;133) and a constant or changing passage cross-section (29;129) for the bulk material passage, or a supporting frame (242) that is swivelable about a swivel axis (248) parallel to the longitudinal axis (L), on which a hopper-like bulk material reception (231) formed of delimitation means (243) is constructed, in which the discharging path through the hollow body-like hopper (28) or the hopper-like bulk material reception (231) is constructed in such a way that it extends from the plane of the grate of the grain channel as filling area of the discharge hopper up to the loading area of the truck to be designated as truck platform and the bulk material reaches the completely covered grain channel via a closed hollow body.

2. System according to Claim 1,
characterized in that
the hopper(28) is comprised of two sections (30,32) which form an angle beta relative to each other and having in each case a rectangular cross-section.

3. Sytem according to Claim 1,
characterized in that
the delimitation means (243) are comprised of two hopper walls (244,245) exhibiting an angle relative to each other.

4. System according to Claim 3,
characterized in that
one of the hopper walls (244) is constructed as a sliding surface (232) by means of a smooth, plate-shaped member formed so as to be inclined relative to the vertical.

5. System according to Claim 3,
characterized in that
one of the hopper walls (245) is formed by means of a plate-shaped member that is swivelably supported within the upper aperture delimitation area (246).

6. System according to Claim 3,
characterized in that
one of the hopper walls (245) is formed by a rubber-like, prestressed flap-shaped trail (233) which is swivelably supported within the top aperture delimitation area (246).

7. System according to any of Claims 1 to 6,
characterized in that
the hopper (28) or the supporting frame (242) is disposed on a swivel arm (34;247), which is hinged so as to be swivelable about the, to the longitudinal axis (L), parallel,swivel axis (35;248), onto the base frame (26) of the conveying car (25).

8. System according to either Claim 1 or 2,
characterized in that,
within the area of the bulk material receiving aperture (31) of the hopper (28), at least one hinged door (38) configured in conformity with the bulk material chute cross-section (29) or, when compared with the bulk material chute cross-section (29), so as to be larger, is swivelably disposed in the hopper (28).

9. System according to Claim 8,
characterized in that,
on the hinged door (38), a projecting swivel arm (39) is disposed, whose mass center (S) is arranged in such a way at a distance from the swivel support, that it supports the hinged door (38) in a rest or initial position closing the bulk material chute cross-section (29).

10. System to any of Claims 1 to 9,
characterized in that
the hopper (28) with the bulk material receiving aperture (31) or the supporting frame (242) with the bulk material receiving aperture (231) is swivelable into a bulk material entry area and, by preference, is swivelable so as to be capable of resting with a stop means (36;249) against a truck chassis.

11. System according to Claim 10,
characterized in that
the stop means (239) is constructed in the form of a pressure plate controlled by sensors (250).

12. System according to either Claim 1 or 2,
characterized in that
the hopper (28) with the bulk material outflow aperture (33) is swivelable as far as into the area of the covering means (23).

13. System according to any of Claims 1 to 12,
characterized in that
the covering means (23) is constructed in the form of a grate (24).

14. System according to any of Claims 1 to 13,
characterized in that
the covering means (23) is constructed in the form of a frame in which a plurality of plate-shaped covering sections are displaceably disposed in order to form a discharge aperture.

15. System according to any of Claims 1 to 14,
characterized in that,
on the frame base (26) of the conveying car (25), a drive means (42) for swiveling the swivel arm (34) is disposed.

16. System according to Claim 15,
characterized in that
the drive means (42) is constructed in the form of at least one lifting piston cylinder unit (241) which can be operated pneumatically or hydraulically.

17. System according to any of Claims 1 to 16,
characterized in that
the conveying car (25) is provided with at least one drive means (43) connected with the aid of a slipping clutch to a drive wheel (27), drive tire, drive track wheel or the like, which is constructed in the form of a mechanical, hydraulic, pneumatic, electromotive or internal combustion engine-powered drive.

18. System according to any of Claims 1 to 17,
characterized in that
the conveying car (25) is provided with a drive means (143) which is constructed in the form of a chain or cable drive, that is comprised of a chain or a cable (46) secured at the end to the covering means (23) and proceeding between two clamping points (44,45) and a drive wheel (47) engaging into the chain or running off on the cable (46), which can be driven with the aid of a mechanical, hydraulic, pneumatic, electromotive or internal combustion engine-powered drive so that the conveying car (25) is moved along the chain or the cable (46).

19. System according to any of Claims 1 to 18,
characterized in that,
on the covering means (23), an extraction device (48) is disposed, with the aid of which air can be extracted from the discharge hopper (21), be made to pass through a filtering system (51) for dust removal and be released into the ambient air.

20. System according to any of Claims 1 to 19,
characterized in that
a vehicle wheel lifting means (17) is disposed on the basic frame (20).

21. System according to any of Claims 1 to 20,
characterized in that,
on the basic frame (20), an extraction device (48) is disposed, with the aid of which air can be drawn off from the area behind the bulk material reception (231), be made to pass through a filtering system (51) for dust removal and be released into the ambient air.

22. System according to any of Claims 19 to 21,
characterized in that,
between the extraction device (48) and/or the basic frame (20) and the top aperture delimitation area (246), which is constituted by a tubular supporting rod (249), a displaceable covering tarpaulin or the like (237) is extended.

23. System according to any of Claims 1 to 21,
characterized in that,
within the top aperture delimitation area (246), which is constituted by a tubular supporting rod (249), a swivelably hinged-on covering hood (234) is disposed.

24. System according to Claim 23,
characterized in that,
on the covering hood (234), a roller (235) is disposed so as to be rotatable.

## Revendications

1. Système (100; 200) pour déchargement sans poussière de matières en vrac qui doivent être déchargées d'un engin de transport comme un poids lourd (10), système qui est constitué par un corps de base (20) avec une rampe de déchargement de poids lourds (11) et par une trémie de déversement (21) d'un caniveau à céréales (12), placée à côté de cette rampe de déchargement de poids lourds (11), équipée dans sa zone de remplissage (22) d'un dispositif de recouvrement (23) qui permet un passage des matières en vrac,
**caractérisé en ce**
qu'un chariot déplaçable (25) est placé en étant mobile sur le dispositif de recouvrement (23) dans un sens tranversal (Q) à angles droits avec le sens longitudinal (L) de la trémie de déversement (21) et que le chariot déplaçable (25) est constitué par un cadre de base (26) positionné sur des roulettes (27), des pneus, des roues de rails ou équivalent, cependant que soit une caisse de déversement (28 ; 128) de forme creuse, pivotant autour d'un axe de pivotement (35) parallèle à l'axe longitudinal (L) est placée sur le cadre de base (26), caisse de déversement qui présente une ouverture de réception des matières en vrac (31 131) et une ouverture de déversement des matières en vrac (33 133) et une section de passage (29 129) constante ou qui varie, soit un cadre porteur (242) est placé sur le cadre de base (26) en étant pivotant autour d'un axe de pivotement (248) parallèle à l'axe longitudinal (L), cadre porteur sur lequel une réception des matières en vrac (231) en forme de trémie, formée par des dispositifs de délimitation (243), est configurée, la voie de déversement à travers la caisse de déversement (28) en forme de corps creux ou la réception des matières en vrac (231) en forme de trémie étant configurée de telle manière qu'elle va du plan de la grille du caniveau à céréales comme zone de remplissage de la trémie de déversement jusqu'à la surface de chargement du poids lourd qui doit être désignée de plateforme de chargement et les matières en vrac arrivant dans le caniveau à céréales complètement recouvert par un corps creux fermé.

2. Système selon la revendication 1,
**caractérisé en ce**
que la caisse de déversement (28) est constituée par deux sections (30, 32) qui présentent un angle beta l'une avec l'autre et qui ont chacune une section rectangulaire.

3. Système selon la revendication 1,
**caractérisé en ce**
que les dispositifs de délimitation (243) sont constitués par deux parois de trémie (244, 245) qui présentent un angle l'une avec l'autre.

4. Système selon la revendication 3,
**caractérisé en ce**
que l'une des parois de la trémie (244) est formée par un corps en forme de plaque plate, configuré en étant incliné par rapport à la verticale, comme surface de glissement (232).

5. Système selon la revendication 3,
**caractérisé en ce**
que l'une des parois de la trémie (245) est formée par un corps en forme de plaque positionné de manière pivotante dans la zone de délimitation supérieure de l'ouverture (246).

6. Système selon la revendication 3,
**caractérisé en ce**
que l'une des parois de la trémie (245) est formée par une traîne (233) précontrainte, du genre caoutchouc, qui est positionnée en étant pivotante dans la zone de délimitation supérieure de l'ouverture (246).

7. Système selon l'une des revendications 1 à 6,
**caractérisé en ce**
que la caisse de déversement (28) ou le cadre porteur (242) est placé sur un bras pivotant (34; 247) qui est articulé sur le cadre de base (26) du chariot déplaçable (25) autour de l'axe de pivotement (35 248) parallèle à l'axe longitudinal (L).

8. Système selon l'une des revendications 1 ou 2,
**caractérisé en ce**
qu'au moins une trappe pivotante (38) formée de manière à correspondre à la section du tuyau des matières en vrac (29) ou à être plus grande que la section pour les matières en vrac (29) est placée dans la caisse de déversement (28) dans la zone de l'ouverture de réception des matières en vrac (31) de la caisse de déversement (28).

9. Système selon la revendication 8,
**caractérisé en ce**
qu'un bras pivotant (39) est placé en porte-à-faux sur la trappe pivotante (38), bras dont le centre de gravité de la masse (S) est placé à un écart de l'appui de pivotement tel qu'il supporte la trappe pivotante (38) dans une position de repos et de départ qui ferme la section du tuyau des matières en vrac (29).

10. Système selon l'une des revendications 1 à 9,
**caractérisé en ce**
que la caisse de déversement (28) avec l'ouverture de réception des matières en vrac (31) ou le cadre porteur (242) avec l'ouverture de réception des matières en vrac (231) est pivotant dans une zone d'entrée des matières en vrac et, de préférence, peut être appuyé sur le châssis du poids lourd avec une butée (36 249).

11. Système selon la revendication 10,
**caractérisé en ce**
que la butée (239) est configurée comme une plaque de pression commandée avec des détecteurs (250).

12. Système selon l'une des revendications 1 ou 2,
**caractérisé en ce**
que la caisse de déversement (28) avec l'ouverture de déversement des matières en vrac (33) est pivotante jusque dans la zone du dispositif de recouvrement (23).

13. Système selon lune des revendications 1 à 12,
**caractérisé en ce**
que le dispositif de recouvrement (23) est configuré comme une grille (24).

14. Système selon l'une des revendications 1 à 13,
**caractérisé en ce**
que le dispositif de recouvrement (23) est formé comme un cadre dans lequel une multitude de sections de recouvrement du type plaque est placée en étant pivotante pour former une ouverture de remplissage.

15. Système selon l'une des revendications 1 à 14,
**caractérisé en ce**
qu'un dispositif d'entraînement (42) pour faire pivoter le bras pivotant (34) est placé sur le cadre de base (26) du chariot déplaçable (25).

16. Système selon la revendication 15,
**caractérisé en ce**
que le dispositif d'entraînement (42) est configuré comme au moins une unité de piston élévateur-cylindre (241) qui peut être actionnée de manière pneumatique ou hydraulique.

17. Système selon l'une des revendications 1 à 16,
**caractérisé en ce**
que le chariot déplaçable (25) présente au moins un dispositif d'entraînement (43) qui est relié par un accouplement à glissement à une roue d'entraînement (27), un pneu d'entraînement, une roue de rail d'entraînement ou équivalent, dispositif qui est configuré comme un entraînement mécanique, hydraulique, pneumatique, électromoteur ou actionné par un moteur à combustion interne.

18. Système selon l'une des revendications 1 à 17,
**caractérisé en ce**
que le chariot déplaçable (25) présente un dispositif d'entraînement (143), qui est configuré comme un entraînement par pignon et chaîne ou comme une commande par câble, qui est constitué par une chaîne ou un câble (46) fixé à l'une des extrémités, qui est tendu sur le dispositif de recouvrement (23) entre deux points de serrage (44, 45) et par une roue d'entraiînement (47), qui s'engrène dans la chaîne ou qui roule sur le câble (46), qui peut être entraînée de manière mécanique, hydraulique, pneumatique, électromotrice ou être entraînée par un moteur à combustion interne de telle manière que le chariot déplaçable (25) se déplace le long de la chaîne ou du câble (46).

19. Système selon l'une des revendications 1 à 18,
**caractérisé en ce**
qu'un dispositif d'aspiration (48) est placé sur le dispositif de recouvrement (23), dispositif d'aspiration au moyen duquel de l'air peut être aspiré de la trémie de déversement (21), peut être guidé à travers un système de filtre (51) pour dépoussiérage et peut être soufflé dans l'air environnant.

20. Système selon l'une des revendications 1 à 19,
**caractérisé en ce**
qu'un dispositif de levage pour roues de véhicule (17) est placé sur le corps de base (20).

21. Système selon l'une des revendications 1 à 20,
**caractérisé en ce**
qu'un dispositif d'aspiration (48) est placé sur le corps de base (20), dispositif au moyen duquel de l'air peut être aspiré de la zone placée à la suite de la réception des matières en vrac (231), peut être guidé à travers un système de filtre (51) pour dépoussiérage et peut être soufflé dans l'air environnant.

22. Système selon l'une des revendications 19 à 21,
**caractérisé en ce**
qu'une bâche de recouvrement mobile ou équivalent (237) s'étend entre le dispositif d'aspiration (48) et/ou le corps de base (20) et la zone de délimitation supérieure de l'ouverture (246) qui est formée par une tige porteuse en forme de tuyau (249).

23. Système selon l'une des revendications 1 à 21,
**caractérisé en ce**
qu'un capot de recouvrement (234) qui est articulé de manière pivotante est placé dans la zone de délimitation supérieure de l'ouverture (246) qui est formée par une tige porteuse en forme de tuyau (249).

24. Système selon la revendication 23,
**caractérisé en ce**
qu'un galet de glissement (235) est placé en étant rotatif sur le capot de recouvrement (234).
